# FASCICULE DE BREVET EUROPEEN

(11) **EP 3 634 644 B1**
(45) Date de publication et mention de la délivrance du brevet: **20.09.2023**
(21) Numéro de dépôt: 18735627.4
(22) Date de dépôt: 03.05.2018
(51) Int. Cl.: B05B 1/34, B05B 15/40, B29C 45/00, B05B 11/00, B05B 15/00

(54) **TÊTE DE DISTRIBUTION DE PRODUIT FLUIDE ET ENSEMBLE DE MOULAGE D'UNE TELLE TÊTE**
FLUIDPRODUKTAUSGABEKOPF UND ANORDNUNG ZUM FORMEN SOLCH EINES KOPFES
FLUID PRODUCT DISPENSING HEAD AND ASSEMBLY FOR MOULDING SUCH A HEAD

(30) Priorité: 04.05.2017 FR 1753950
(43) Date de publication de la demande: 15.04.2020
(73) Titulaire: APTAR France SAS, 27110 Le Neubourg (FR)
(72) Inventeur: CHEVALIER, Frédéric, 27890 La Neuville du Bosc (FR); PLESSIS, Frank, 27370 Fouqueville (FR)
(74) Mandataire: CAPRI
(86) Numéro de dépôt international: PCT/FR2018/051104
(87) Numéro de publication internationale: WO 2018/203004

(56) Documents cités:
- EP-A1- 2 767 348
- WO-A1-94/12406
- WO-A1-2009/130461
- WO-A1-2010/131042
- WO-A1-2011/064584
- JP-U- H04 134 456
- US-A- 4 225 060
- US-B2- 7 731 062

## Description

La présente invention concerne une tête de distribution de produit fluide comprenant un corps monobloc formant un puits d'entrée axial apte à être raccordé à un organe de distribution, tel qu'une pompe ou une valve, et un conduit d'alimentation transversal qui s'étend à partir du puits d'entrée axial. La tête de distribution comprend également un orifice de distribution en communication de fluide avec le conduit d'alimentation transversal. Une telle tête peut par exemple se présenter sous la forme d'un poussoir actionnable à l'aide d'un ou de plusieurs doigt(s) d'une main. Les domaines privilégiés d'application de la présente invention sont ceux de la parfumerie, de la cosmétique ou encore de la pharmacie, sans exclure d'autres domaines.

Dans l'art antérieur, on connaît le document WO2011/064584 et FR2994866A1 qui décrit une tête de distribution dans laquelle des canaux de tourbillonnement sont formés dans une surface tronconique et débouchent en biais dans la chambre de tourbillonnement qui définit une paroi latérale cylindrique. Plus précisément, un gicleur, formant l'orifice de pulvérisation et la paroi cylindrique, est engagé autour d'une broche formant une paroi de fond et la surface tronconique dans laquelle les canaux de tourbillonnement sont formés. Ainsi, les flux de produit fluide issus des canaux de tourbillonnement pénètrent dans la chambre de tourbillonnement en traversant la chambre de tourbillonnement en direction de l'orifice de pulvérisation. Il faut noter que les sections de passage de produit fluide dans cette tête de l'art antérieur sont particulièrement réduites par rapport à une tête conventionnelle. Le diamètre de l'orifice de distribution est de l'ordre de 150 microns, alors que pour une tête conventionnelle, on est plutôt autour de 300 microns.

De manière empirique, on a constaté parfois un problème de bouchage du gicleur par des particules de diverses natures et d'origine souvent inconnue, particulièrement avec des têtes dont l'orifice de distribution est petit. Une solution simple aurait été de placer un filtre à particule à l'entrée du tube plongeur. Une autre solution aurait été de filtrer le produit fluide avant le remplissage du réservoir du distributeur.

La présente invention a pour but de trouver une autre solution qui n'engendre qu'un minimum de modification, voire presque aucune, du distributeur, de sa fabrication ou de sa chaine de conditionnement.

Pour ce faire, la présente invention prévoit qu'un filtre soit situé dans le puits d'entrée axial et/ou dans le conduit d'alimentation transversal, le produit fluide traversant le filtre. Le filtre est ainsi placé le plus près possible de l'orifice de distribution. Le filtre est ainsi formé par le corps monobloc de la tête qui forme également le puits d'entrée axial et le conduit d'alimentation transversal. La formation intégrée du filtre dans le corps monobloc permet d'éviter une opération de montage ou d'assemblage. De plus, la formation du filtre n'engendre aucun inconvénient au niveau de l'opération de moulage. Il est à noter que le filtre est situé à la jonction entre le puits d'entrée axial et le conduit d'alimentation transversal. Ainsi, les particules retenues par le filtre restent dans le puits d'entrée et ne risquent pas de boucher ou de réduire la section de passage du conduit d'alimentation. Selon un mode de réalisation pratique, le conduit d'alimentation transversal définit une entrée, le puits d'entrée axial formant un méplat dans lequel est formée l'entrée du conduit d'alimentation transversal. Dans ce cas, le filtre peut s'étendre dans le plan du méplat au niveau de l'entrée du conduit d'alimentation transversal.

Selon d'autres aspects de l'invention, la tête de pulvérisation comprend en outre un manchon de raccordement apte à recevoir une tige d'actionnement d'un organe de distribution, tel qu'une pompe ou une valve, ainsi qu'un gicleur définissant, avec le corps monobloc, une chambre de tourbillonnement en amont de l'orifice de pulvérisation, et des canaux de tourbillonnement qui débouchent transversalement dans la chambre de tourbillonnement de manière à pulvériser le produit fluide à travers l'orifice de distribution. Il s'agit là de caractéristiques conventionnelles pour une tête de pulvérisation dans les domaines de la parfumerie, de la cosmétique ou de la pharmacie.

La présente invention définit également un distributeur de produit fluide comprenant un réservoir, une pompe montée sur le réservoir et une tête de distribution, telle que définie ci-dessus, associée à la pompe.

La présente invention définit aussi un ensemble de moulage pour mouler la tête de distribution de l'invention, cet ensemble comprenant une broche de puits pour former le puits d'entrée axial et une broche de conduit pour former le conduit d'alimentation transversal, la broche de conduit comprenant une paroi d'extrémité qui est formée avec une empreinte en creux, la broche de puits comprenant une paroi latérale de contact contre laquelle la paroi d'extrémité vient en contact pour définir entre elles un réseau ouvert qui va être injecté de matière plastique en fusion pour former le filtre. Ainsi, la seule différence avec un ensemble de moulage conventionnel est que la paroi d'extrémité de la broche de conduit forme une empreinte en creux correspondant au filtre. L'opération de moulage reste strictement la même. Avantageusement, la paroi latérale de contact peut être plane et est formée par un revêtement souple qui est déformable par la paroi d'extrémité pour bien isoler le réseau de canaux ouverts.

L'esprit de l'invention réside dans le fait d'intégrer un filtre dans la tête de distribution, et même de le réaliser de moulage avec le corps de la tête sous la forme d'une grille. La localisation du filtre à la jonction entre le puit d'entrée et le conduit d'alimentation, permet de bloquer les particules dans le puits d'entrée, dont le volume est bien supérieur à celui du conduit d'alimentation.

L'invention sera maintenant plus amplement décrite en référence aux dessins joints, donnant à titre d'exemple non limitatif, un mode de réalisation de l'invention, et une variante.

Sur les figures :
La figure 1 est une vue en coupe transversale verticale à travers un distributeur de produit fluide selon la présente invention,
La figure 2a est une vue fortement agrandie du détail A de la figure 1,
Les figures 2b, 2c et 2d sont des vues montrant des variantes de réalisation de la figure 2a,
La figure 2e est une vue similaire aux figures 2a à 2d pour une tête de distribution de l'art antérieur,
La figure 3a est une vue schématique en perspective d'une broche de conduit, et
La figure 3b est une vue schématique en perspective d'une broche de puits apte à coopérer avec la broche de conduit de la figure 3a pour mouler le filtre de l'invention.

La tête de distribution T de la présente invention peut être mise en oeuvre à la sortie de n'importe quel organe de distribution de produit fluide D, comme par exemple une pompe, une valve, un réservoir écrasable, etc. La tête de distribution de l'invention trouvera une application privilégiée en tant que poussoir actionnable manuellement à l'aide d'un ou de plusieurs doigt(s). Ce poussoir peut être intégré à une pompe ou à une valve, ou de préférence rapporté sur l'extrémité libre d'une tige d'actionnement formant un conduit de sortie interne. La tête de distribution est destinée à véhiculer du produit fluide.

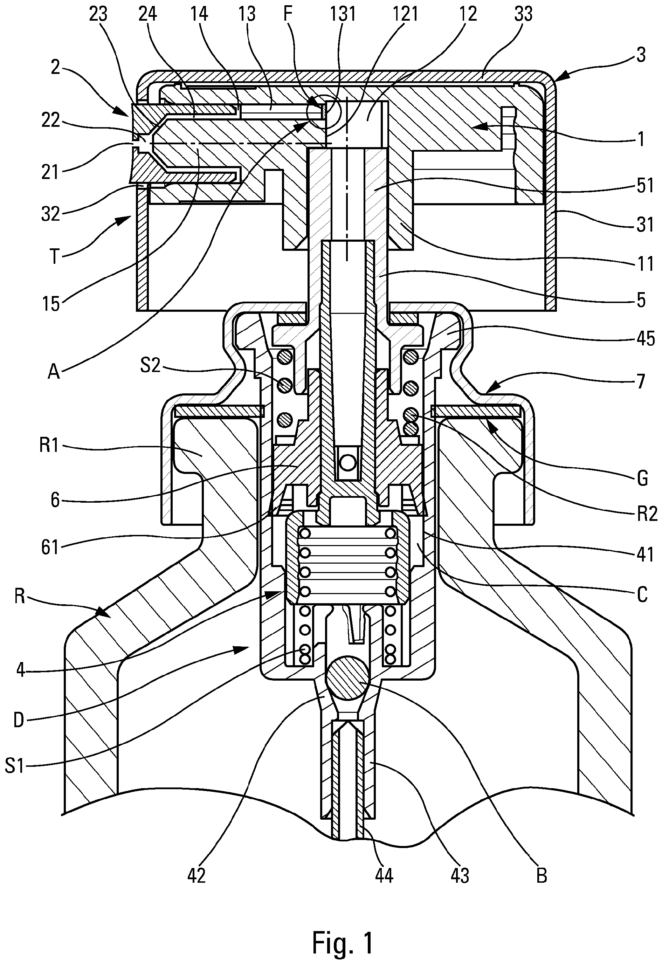

Sur la figure 1, l'organe de distribution de produit fluide D est une pompe à précompression. Cette pompe présente une configuration générale sensiblement classique avec un corps de pompe 4 définissant en partie basse un siège pour une bille B et un porte tube 43 pour un tube plongeur 44. En partie haute, le corps de pompe 4 forme une collerette 45 qui fait saillie radialement vers l'extérieur. Cette collerette 45 peut servir à l'accrochage d'un système de fixation 7, qui peut par exemple se présenter sous la forme d'une bague à sertir. On peut bien entendu envisager d'autres formes de système de fixation 7 à associer au corps de pompe 4. Le système de fixation 7 est équipé d'un joint de col G permettant de réaliser une étanchéité avec le col R1 d'un réservoir de produit fluide R. Le corps de pompe 4 définit intérieurement un fût de coulissement cylindrique 41 dans lequel coulisse de manière étanche un piston 6 doté d'une lèvre d'étanchéité 61. Le piston 6 est monté sur une tige d'actionnement 5 qui est sollicitée en position de repos par un ressort de rappel S1. Pour créer la précompression, le piston 6 est sollicité par un ressort de précompression S2. Le piston 6 est monté mobile sur la tige d'actionnement 5 de manière à pouvoir démasquer un passage de sortie pour le produit fluide comprimé dans la chambre de pompe C. En d'autres termes, le piston 6 remplit une fonction de clapet de sortie en dégageant un passage de sortie lorsque la pression à l'intérieur de la chambre de pompe C atteint une valeur prédéterminée. Le ressort de précompression S2 sollicite le piston 6 dans la position fermée du clapet de sortie. Ainsi, le déplacement du piston 6 sur la tige d'actionnement 5 ne peut se faire que lorsque la pression à l'intérieur de la chambre C est suffisante pour comprimer le ressort de précompression S2.

Ainsi, en enfonçant la tige d'actionnement 5 à l'intérieur du corps de pompe 4 à l'encontre du ressort S1, le volume de la chambre de pompe C diminue, mettant ainsi le produit fluide qu'il contient sous pression. Dès que la pression atteint une valeur prédéterminée, le clapet de sortie s'ouvre et le produit fluide sous pression est refoulé à travers la tige d'actionnement 5 pour parvenir jusqu'au poussoir intégrant une tête de distribution selon l'invention.

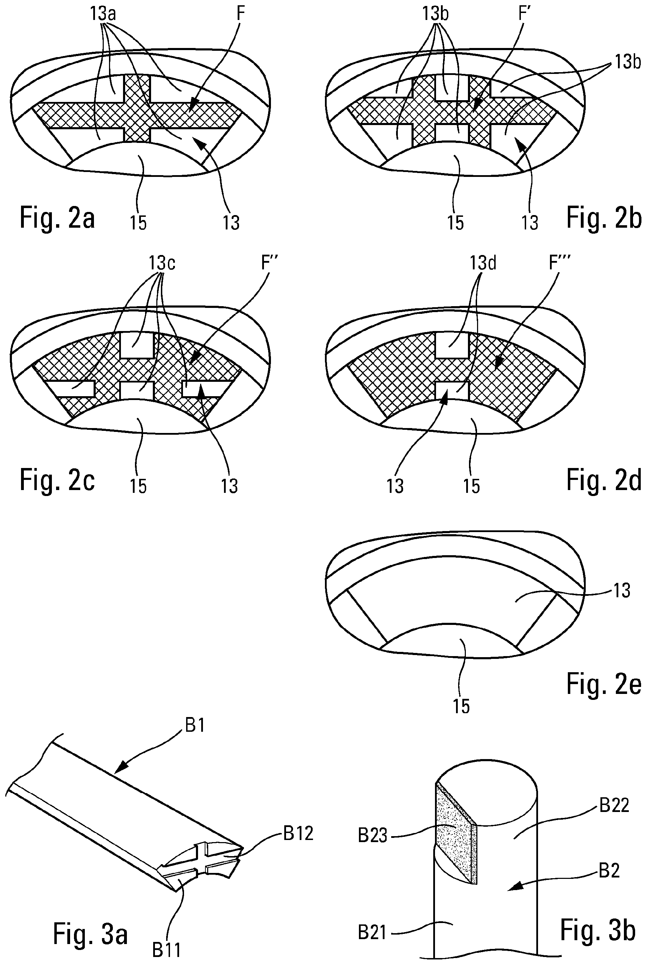

La tête T, selon un mode de réalisation non limitatif de l'invention, comprend un corps de tête 1 qui peut être réalisé par injection moulage de matière plastique approprié. Le corps de tête 1 est réalisé de manière monobloc. Il comprend de manière conventionnelle un manchon de raccordement 11 destiné à être rapporté sur l'extrémité libre 51 de la tige d'actionnement 5. Ce manchon de raccordement 11 donne directement sur un puits d'entrée axial 12, qui forme avantageusement une paroi latérale plane ou méplat 121. Le puits d'entrée axial 12 se raccorde à un conduit d'alimentation transversal 13 dont l'entrée 131 est située au niveau du méplat 121. Alors que le manchon de raccordement 11 et le puits d'entrée axial 12 s'étendent sensiblement dans le prolongement de la tige d'actionnement 5, le conduit d'alimentation transversal 13 s'étend perpendiculairement à la tige d'actionnement 5. L'entrée 131 est plus précisément située en haut du méplat 121. Comme on peut le voir sur les figures 2a, 2b et 2c, la section transversale du conduit d'alimentation transversal 13 présente une forme de segment de couronne avec deux bords longs courbes et deux bords d'extrémité rectilignes, mais orientés de manière divergente. Le conduit d'alimentation transversal 13 débouche dans un logement 14 qui est de préférence cylindrique et qui débouche latéralement sur la périphérie du corps de tête 1. Le logement 14 contient un noyau 15 qui fait saillie vers l'extérieur du logement 14. Ainsi, un espace annulaire est ménagé à l'intérieur du logement 14 autour du noyau 15.

Il est à noter que le puits d'entrée axial 12 et le conduit d'alimentation transversal 13 achemine le produit fluide, à l'exclusion de tout air ou gaz.

De manière conventionnelle, un gicleur 2 est rapporté et inséré fixement à l'intérieur du logement 14 autour du noyau 15, comme on peut le voir sur la figure 1. Ce gicleur forme un orifice de distribution 21 à travers lequel le produit fluide est distribué, par exemple sous forme pulvérisée en fines gouttelettes. On parle de spray. Le diamètre de l'orifice de distribution est de préférence inférieur ou égal à 150 microns. En variante, le gicleur peut former un réseau de 2 à 100 orifices de distribution ayant un diamètre de 1 à 100 microns. En amont de l'orifice 21, le gicleur 2 forme, avec le noyau 15, une chambre de tourbillonnement 22 et des canaux de tourbillonnement 23 qui débouchent transversalement dans la chambre de tourbillonnement 22. Ces canaux de tourbillonnement 23 sont reliés au conduit d'alimentation transversal 13 par des passages 24 formés entre le gicleur 2 et le noyau 15. Il s'agit là d'une conception conventionnellement pour un gicleur monté sur un noyau dans les domaines de la parfumerie, de la cosmétique ou de la pharmacie.

La tête de distribution T peut encore être pourvue d'une frette d'habillage 3 qui enveloppe de manière esthétique le corps de tête 1 en laissant le gicleur 2 apparent. Cette frette 3 comprend une jupe latérale 31 dans laquelle est formée une fenêtre 32 pour le gicleur 2, ainsi qu'une paroi supérieur d'appui 33 sur laquelle l'utilisateur peut appuyer à l'aide d'un doigt, en général l'index.

Selon l'invention, la tête de distribution T, et plus particulièrement son corps 1, est pourvue d'un filtre F en amont du logement 14 du gicleur 2. Ce filtre F est destiné à être traversé par du produit fluide. Ce filtre est situé soit dans le puits d'entrée axial 12, soit dans le conduit d'alimentation transversal 13. Sur la figure 1, le filtre F est situé à la jonction entre le puits d'entrée axial 12 et le conduit d'alimentation transversal 13. Plus en détail, le filtre est situé au niveau de l'entrée 131 du conduit d'alimentation transversal 13. Le filtre F est avantageusement situé dans le conduit 131 sans faire saillie dans le puits 12. La face amont du filtre F est de préférence disposée dans l'alignement du méplat 121.

Le filtre F fait partie intégrante du corps de tête monobloc 1. En d'autres termes, le filtre F est réalisé de moulage avec le puits 12 et le conduit 13. Sur la figure 2a, on voit le filtre F de la figure 1. Il se présente sous la forme d'une grille ou d'une croix, qui segmente la section transversale du conduit 13 en quatre secteurs 13a. Ainsi, certaines particules en provenance du puits 12 seront stoppées par le filtre F.

Sur la figure 2b, on voit une variante de réalisation pour le filtre. Ce filtre F' se présente aussi sous la forme d'une grille, mais celle-ci segmente la section transversale du conduit 13 en six secteurs 13b. Ainsi, le filtre F' pourra bloquer des particules plus fines que le filtre F de la figure 2a.

Sur la figure 2c, on voit une autre variante de réalisation pour le filtre. Ce filtre F" ne présente que quatre secteurs 13c. Ainsi, le filtre F" est encore plus sélectif.

Sur la figure 2d, on voit encore une autre variante de réalisation pour le filtre. Ce filtre F‴ ne présente que deux petits secteurs 13d. Ainsi, le filtre F‴ est très sélectif.

Sur la figure 2e, on voit un conduit d'alimentation transversal 13 classique dépourvu de filtre. Il est évident que ce conduit 13 laisse passer des particules bien plus grandes qu'avec les filtres F, F', F" et F'".

A titre purement indicatif, la section de passage du conduit d'alimentation 13 peut être de l'ordre 0,9 mm². Le cumul des secteurs 13a de la figure 2a est alors de l'ordre de 0,4 à 0,5 mm². Le cumul des secteurs 13b de la figure 2b est de l'ordre de 0,3 à 0,4 mm². Le cumul des secteurs 13c de la figure 2c est de l'ordre de 0,2 à 0,25 mm² et le cumul des secteurs 13d de la figure 2d est de l'ordre de 0,1 à 0,15 mm².

Les figures 3a et 3b représentent très schématiquement des broches de moulage B1 et B2 faisant partie d'un ensemble de moulage pour mouler le corps de tête 1.

La broche B1 est une broche de conduit avec laquelle on forme le conduit d'alimentation transversal 13. Cette broche de conduit B1 comprend une paroi d'extrémité B11 qui est formée avec une empreinte en creux B12 en forme de grille ou de croix correspondant au filtre F.

La broche B2 est une broche de puits avec laquelle on forme le puits d'entrée axial 12. La broche de puits B2 comprend une section inférieure B21 pour le moulage de l'intérieur du manchon de raccordement 11 et une section supérieure B22 pour le moulage des parois intérieures du puits d'entrée axial 12. La section supérieure B22 de la broche B2 comprend une paroi latérale de contact B23 qui est avantageusement plane. Cette paroi latérale de contact B23 est avantageusement formée avec ou par un revêtement souple qui est déformable.

Lors du moulage, la paroi d'extrémité B11 de la broche de conduit B1 est amenée en contact appuyé contre la paroi latérale de contact B23 de la broche de puits B2. Ainsi, l'empreinte en creux B12 est recouverte par la paroi latérale de contact B23, créant ainsi entre elles un réseau de canaux ouverts qui va être injecté de matière plastique en fusion pour former le filtre F. Grâce au revêtement souple de la paroi latérale de contact B23, la paroi d'extrémité B11 peut venir en contact intime en déformant légèrement le revêtement souple pour bien isoler le réseau de canaux ouverts. De plus, le revêtement souple permet de réduire l'usure de la paroi d'extrémité B11. Par ailleurs, le remplacement du revêtement souple est plus facile à réaliser que la reprise de la paroi d'extrémité B11.

Avec une telle tête de distribution ou de pulvérisation, on réduit considérablement les risques de bouchage au niveau du gicleur ou du conduit d'alimentation transversal.

## Revendications

1. Tête de pulvérisation de produit fluide comprenant un corps de tête monobloc (1) formant:
- un puits d'entrée axial (12) apte à être raccordé à un organe de distribution (D), tel qu'une pompe ou une valve, et
- un conduit d'alimentation transversal (13) qui s'étend à partir du puits d'entrée axial (12),
la tête de distribution comprenant également un orifice de pulvérisation (21) en communication de fluide avec le conduit d'alimentation transversal (13), le produit fluide issu de l'organe de distribution (D) traversant le puits d'entrée axial (12) et le conduit d'alimentation transversal (13) pour parvenir à l'orifice de distribution (21),
**caractérisée en ce qu'**un filtre (F ; F' ; F" ; F'") est situé à la jonction entre le puits d'entrée axial (12) et le conduit d'alimentation transversal (13), ce filtre (F ; F' ; F" ; F‴) étant formé par le corps monobloc (1) sous la forme d'une grille.

2. Tête de pulvérisation selon la revendication 1, dans laquelle le filtre (F ; F'; F" ; F‴) est situé dans le conduit d'alimentation transversal (131) sans faire saillie dans le puits d'entrée axial (12).

3. Tête de pulvérisation selon la revendication 1 ou 2, comprenant en outre un gicleur (2) formant un réseau de 2 à 100 orifices de pulvérisation ayant un diamètre de 1 à 100 microns.

4. Tête de pulvérisation selon l'une quelconque des revendications précédentes, dans laquelle le conduit d'alimentation transversal (13) définit une entrée (131), le puits d'entrée axial (12) formant un méplat (121) dans lequel est formée l'entrée (131) du conduit d'alimentation transversal (13).

5. Tête de pulvérisation selon la revendication 4, dans laquelle le filtre s'étend dans le plan du méplat (121) au niveau de l'entrée (131) du conduit d'alimentation transversal (13).

6. Tête de pulvérisation selon la revendication 5, dans laquelle la face amont du filtre F est disposée dans l'alignement du méplat 121.

7. Tête de pulvérisation selon les revendications précédentes, dans laquelle le conduit d'alimentation transversal (13) débouche dans un logement (14), un gicleur (2) formant l'orifice de distribution (21) étant engagé dans le logement (14).

8. Tête de pulvérisation selon les revendications précédentes, comprenant en outre un manchon de raccordement (11) apte à recevoir une tige d'actionnement (5) d'un organe de distribution (D), tel qu'une pompe ou une valve, ainsi qu'un gicleur (2) définissant, avec le corps monobloc (1), une chambre de tourbillonnement (22) en amont de l'orifice de pulvérisation (21), et des canaux de tourbillonnement (23) qui débouchent transversalement dans la chambre de tourbillonnement (22) de manière à pulvériser le produit fluide à travers l'orifice de distribution (21).

9. Tête de pulvérisation selon les revendications précédentes, dans laquelle le diamètre de l'orifice de distribution (21) est inférieur ou égal à 150 microns.

10. Distributeur de produit fluide comprenant un réservoir (R), une pompe montée sur le réservoir (R) et une tête de pulvérisation (T), selon l'une quelconque des revendications précédentes, associée à la pompe.

11. Ensemble de moulage pour mouler une tête de pulvérisation (T) selon l'une quelconque des revendications 1 à 9, comprenant une broche de puits (B2) pour former le puits d'entrée axial (12) et une broche de conduit (B1) pour former le conduit d'alimentation transversal (13), la broche de conduit (B1) comprenant une paroi d'extrémité (B11) qui est formée avec une empreinte en creux (B12), la broche de puits (B2) comprenant une paroi latérale de contact (B23) contre laquelle la paroi d'extrémité (B11) vient en contact pour définir entre elles un réseau de canaux ouverts qui va être injecté de matière plastique en fusion pour former le filtre (F ; F'; F" ; F‴).

12. Ensemble de moulage selon la revendication 11, dans lequel la paroi latérale de contact (B23) est avantageusement plane et est formée par un revêtement souple qui est déformable par la paroi d'extrémité (B11) pour bien isoler le réseau de canaux ouverts.

## Patentansprüche

1. Zerstäubungskopf für ein Fluidprodukt, der einen einstückigen Kopfkörper (1) umfasst, der Folgendes bildet:
- einen axialen Einlassschacht (12), der geeignet ist, mit einem Abgabeorgan (D) wie etwa einer Pumpe oder einer Ventileinrichtung verbunden zu sein, und
- eine quer verlaufende Versorgungsleitung (13), die sich ausgehend von dem axialen Einlassschacht (12) erstreckt,
wobei der Abgabekopf ebenfalls eine Zerstäubungsöffnung (21) umfasst, die mit der quer verlaufenden Versorgungsleitung (13) in Fluidverbindung steht, wobei das Fluidprodukt aus dem Abgabeorgan (D) den axialen Einlassschacht (12) und die quer verlaufende Versorgungsleitung (13) durchquert, um zur Abgabeöffnung (21) zu gelangen,
**dadurch gekennzeichnet, dass** sich ein Filter (F; F'; F"; F‴) an der Verbindung zwischen dem axialen Einlassschacht (12) und der quer verlaufenden Versorgungsleitung (13) befindet, wobei dieser Filter (F; F'; F"; F'") vom einstückigen Körper (1) in Form eines Gitters gebildet ist.

2. Zerstäubungskopf nach Anspruch 1, wobei sich der Filter (F; F'; F"; F‴) in der quer verlaufenden Versorgungsleitung (131) befindet, ohne in den axialen Einlassschacht (12) hineinzuragen.

3. Zerstäubungskopf nach Anspruch 1 oder 2, ferner umfassend eine Düse (2), die ein Netz von 2 bis 100 Zerstäubungsöffnungen mit einem Durchmesser von 1 bis 100 Mikrometern bildet.

4. Zerstäubungskopf nach einem der vorhergehenden Ansprüche, wobei die quer verlaufende Versorgungsleitung (13) einen Einlass (131) definiert, wobei der axiale Einlassschacht (12) eine Abflachung (121) bildet, in welcher der Einlass (131) der quer verlaufenden Versorgungsleitung (13) ausgebildet ist.

5. Zerstäubungskopf nach Anspruch 4, wobei sich der Filter in der Ebene der Abflachung (121) am Einlass (131) der quer verlaufenden Versorgungsleitung (13) erstreckt.

6. Zerstäubungskopf nach Anspruch 5, wobei die stromaufwärtige Seite des Filters F in Ausrichtung mit der Abflachung (121) angeordnet ist.

7. Zerstäubungskopf nach den vorhergehenden Ansprüchen, wobei die quer verlaufende Versorgungsleitung (13) in einer Aufnahme (14) mündet, wobei eine Düse (2), welche die Abgabeöffnung (21) bildet, mit der Aufnahme (14) in Eingriff steht.

8. Zerstäubungskopf nach den vorhergehenden Ansprüchen, ferner umfassend eine Verbindungsmuffe (11), die geeignet ist, einen Betätigungsstift (5) eines Abgabeorgans (D) wie etwa einer Pumpe oder einer Ventileinrichtung sowie eine Düse (2) aufzunehmen, die mit dem einstückigen Körper (1) eine Verwirbelungskammer (22) stromauf der Zerstäubungsöffnung (21) und Verwirbelungskanäle (23) definiert, die quer in der Verwirbelungskammer (22) münden, so dass sie das Fluidprodukt durch die Abgabeöffnung (21) zerstäuben.

9. Zerstäubungskopf nach den vorhergehenden Ansprüchen, wobei der Durchmesser der Abgabeöffnung (21) kleiner als oder gleich 150 Mikrometer ist.

10. Fluidproduktspender umfassend einen Vorratsbehälter (R), eine Pumpe, die am Vorratsbehälter (R) angebracht ist, und einen Zerstäubungskopf (T) nach einem der vorhergehenden Ansprüche, der mit der Pumpe in Verbindung steht.

11. Formungsanordnung zum Formen eines Zerstäubungskopfes (T) nach einem der Ansprüche 1 bis 9, umfassend einen Schachtpin (B2) zur Bildung des axialen Einlassschachtes (12) und einen Leitungspin (B1) zur Bildung der quer verlaufenden Versorgungsleitung (13), wobei der Leitungspin (B1) eine Endwand (B11) umfasst, die mit einem vertieften Abdruck (B12) gebildet ist, wobei der Schachtpin (B2) eine Kontaktseitenwand (B23) umfasst, gegen welche die Endwand (B11) in Kontakt kommt, um zwischen ihnen ein Netz von offenen Kanälen zu definieren, das aus geschmolzenem Kunststoff gespritzt wird, um den Filter (F; F'; F"; F'") zu bilden.

12. Formungsanordnung nach Anspruch 11, wobei die Kontaktseitenwand (B23) vorteilhafterweise eben ist und von einer weichen Beschichtung gebildet ist, die von der Endwand (B11) verformt werden kann, um das Netz von offenen Kanälen gut zu isolieren.

## Claims

1. A fluid spray head comprising a single-piece head body (1) forming:
- an axial inlet well (12) that is suitable for connecting to a dispenser member (D), such as a pump or a valve, and
- a transverse feed duct (13) that extends from the axial inlet well (12),
the spray head also comprising a dispenser orifice (21) in fluid communication with the transverse feed duct (13), the fluid coming from the dispenser member (D) passing through the axial inlet well (12) and the transverse feed duct (13) so as to reach the dispenser orifice (21),
the dispenser head being **characterized in that** a filter (F; F'; F"; F‴) is situated at the junction between the axial inlet well (12) and the transverse feed duct (13), this filter (F; F'; F"; F‴) being formed by the single-piece body (1) in the form of a grid.

2. Spray head according to claim 1, wherein the filter (F; F'; F"; F‴) is situated in the transverse feed duct (131) without protruding in the axial inlet well (12).

3. Dispenser head according to claim 1 or claim 2, further comprising a nozzle (2) forming a network of 2 to 100 spray orifices with a diameter of 1 to 100 µm.

4. Spray head according to any preceding claim, wherein the transverse feed duct (13) defines an inlet (131), the axial inlet well (12) forming a flat (121) in which the inlet (131) of the transverse feed duct (13) is formed.

5. Spray head according to claim 4, wherein the filter extends in the plane of the flat (121) at the inlet (131) of the transverse feed duct (13).

6. Spray head according to claim 5, wherein the upstream face of filter F is aligned with flat (121)

7. Spray head according to the preceding claims, wherein the transverse feed duct (13) opens out into a housing (14), and a nozzle (2) forming the dispenser orifice (21) is engaged in the housing (14).

8. Spray head according to the preceding claims, further comprising a connection sleeve (11) that is suitable for receiving an actuator rod (5) of a dispenser member (D), such as a pump or a valve, and a nozzle (2) that cooperates with the single-piece body (1) to define a swirl chamber (22) upstream from the spray orifice (21), and swirl channels (23) that open out transversally into the swirl chamber (22) so as to spray the fluid through the dispenser orifice (21).

9. Spray head according to the preceding claims, wherein the diameter of the dispenser orifice (21) is less than or equal to 150 µm.

10. A fluid dispenser comprising a reservoir (R), a pump mounted on the reservoir (R), and a spray head (T) according to any preceding claim and associated with the pump.

11. A molding assembly for molding a spray head (T) according to any one of claims 1 to 9, comprising a well pin (B2) for forming the axial inlet well (12) and a duct pin (B1) for forming the transverse feed duct (13), the duct pin (B1) including an end wall (B11) that is formed with a recessed indentation (B12), the well pin (B2) including a lateral contact wall (B23) against which the end wall (B11) comes into contact so as to define between them a network of open channels suitable for receiving an injection of a melt of plastics material so as to form the filter (F; F'; F"; F‴).

12. A molding assembly according to claim 11, wherein the lateral contact wall (B23) is advantageously plane, and is formed by a flexible coating that is deformable by the end wall (B11) so that the network of open channels is well isolated.
